(19) Europäisches Patentamt
European Patent Office
Office européen des brevets

(11) **EP 2 816 258 A1**

(12) **EUROPÄISCHE PATENTANMELDUNG**

(43) Veröffentlichungstag:
**24.12.2014  Patentblatt 2014/52**

(51) Int Cl.:
*F16H 61/30* *(2006.01)*        *F15B 11/12* *(2006.01)*

(21) Anmeldenummer: **14167829.2**

(22) Anmeldetag: **12.05.2014**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **18.06.2013   DE 102013211325**

(71) Anmelder: **ZF Friedrichshafen AG**
**88038 Friedrichshafen (DE)**

(72) Erfinder:
• **Sauer, Simon**
**88046 Friedrichshafen (DE)**
• **Prijovic, Radoje**
**88046 Friedrichshafen (DE)**
• **Haegele, Juergen**
**88090 Immenstaad (DE)**

(54)    **Stellzylinderanordnung**

(57)    Die Erfindung betrifft eine Stellzylinderanordnung (1) für vier Stellpositionen (I, II, III, IV), umfassend einen Zylinder (2), einen im Zylinder (2) aufgenommenen Kolben (3) mit einer aus dem Zylinder (2) herausragenden Kolbenstange (4), einen ersten Druckraum (D1) sowie einen zweiten Druckraum (D2), welche jeweils mit einem Druckmedium beaufschlagbar sind, sowie zwei Schaltventile, durch welche der Ein- und Auslass des Druckmediums steuerbar ist.

Es wird vorgeschlagen, dass zwei Kraftspeicher (F1, F2) vorgesehen sind, durch welche der Kolben (3) gegenüber mit dem Zylinder (2) verbundenen Widerlagern (9, 10) abstützbar ist.

Fig. 1

Printed by Jouve, 75001 PARIS (FR)

EP 2 816 258 A1

**Beschreibung**

Die Erfindung betrifft eine Stellzylinderanordnnung für vier Stellpositionen, umfassend einen Zylinder, einen im Zylinder aufgenommenen Kolben mit einer aus dem Zylinder herausragenden Kolbenstange, einen ersten sowie einen zweiten Druckraum, welche jeweils mit einem Druckmedium beaufschlagbar sind, sowie zwei Schaltventile, durch welche der Ein- und Auslass des Druckmediums steuerbar ist.

In der älteren Anmeldung der Anmelderin DE 10 2012 218 907 A1 ist eine Stellzylinderanordnung für vier Stellpositionen in zwei Ausführungsformen offenbart: Die erste Ausführungsform umfasst einen Schwimmkolben, während die zweite Ausführungsform eine Zylinder/Kolben-Anordnung ohne einen Schwimmkolben umfasst. Der Zylinder weist zwei Durchmesserbereiche auf, welche durch eine Schulter gegeneinander abgesetzt sind. Die Kolbenstange trägt an ihrem aus dem Zylinder herausragenden Ende eine als Schraubenfeder ausgebildete Druckfeder, welche zwischen zwei Federtöpfen angeordnet und gegenüber gehäuseseitigen Widerlagern abstützbar ist. Die vier Stellpositionen sind einerseits durch zwei Endlagenpositionen und andererseits durch zwei zwischen den Endlagen angeordnete Zwischenpositionen gekennzeichnet, wovon die eine Zwischenposition als federzentrierte Stellposition bezeichnet wird, d.h. beide Druckräume sind drucklos, und der Kolben bzw. die Kolbenstange werden allein durch die gefesselte Druckfeder zentriert bzw. fixiert. Die andere Zwischenstellung (Stellposition III) ist durch ein Kräftegleichgewicht von Feder- und Kolbenkräften gekennzeichnet: Beide Druckräume sind druckbeaufschlagt; die resultierende Kolbenkraft steht im Gleichgewicht mit der Federkraft.

Ausgehend von der älteren Anmeldung, insbesondere der zweiten Ausführungsform, bezweckt die Erfindung eine weitere Verbesserung der Stellzylinderanordnung, insbesondere eine Verbesserung der Stabilität der Zwischenstellungen.

Gemäß Patentanspruch 1 unterscheidet sich die Erfindung gegenüber dem Gegenstand der älteren Anmeldung im Wesentlichen dadurch, dass zwei Kraftspeicher, insbesondere zwei als Druckfedern ausgebildete Schraubenfedern vorgesehen sind, die vorzugsweise koaxial zueinander und ineinander angeordnet sind. Durch Anordnung dieser beiden Druckfedern wird eine stabilere Zwischenstellung erreicht, d.h. eine Stellposition, die zwischen den beiden Endanschlägen liegt und nicht rein federzentriert ist.

Nach einer bevorzugten Ausführungsform sind die beiden Druckfedern zwischen Federtöpfen abgestützt, die jedoch bezügliches ihres Außendurchmessers unterschiedlich ausgebildet sind, sodass der erste Federtopf nur ein Widerlager für die erste innere Feder und der zweite Federtopf ein zweites Widerlager für die erste innere und die zweite äußere Feder bildet.

Nach einer weiteren bevorzugten Ausführungsform ist der Zylinder, welcher den Kolben und die Kolbenstange aufnimmt, in einem Gehäuse angeordnet, welches außerhalb des Zylinders sich gegenüberliegende Widerlager für die beiden Druckfedern bildet. Die äußere Druckfeder stützt sich dabei einerseits an dem ersten gehäuseseitigen Widerlager und andererseits über den zweiten Federtopf am zweiten gehäuseseitigen Widerlager ab. Damit kann ein stufenförmiger Verlauf der Federkraft erreicht werden.

Nach einer weiteren bevorzugten Ausführungsform wird der Kolben in einer seiner Zwischenstellungen allein durch das Gleichgewicht der Kräfte aus Feder- und Kolbenkräften in einer stabilen Lage gehalten. Dies ist insbesondere durch die nacheinander erfolgende Komprimierung der beiden Druckfedern möglich. Die zweite, stärkere Feder bewirkt somit einen sprunghaften Anstieg der Federkraft, was wie ein mechanischer Anschlag wirkt. Dadurch ergibt sich eine stabile Lage für die Zwischenstellung, welche mit einer Endlage vergleichbar ist.

Nach einer weiteren bevorzugten Ausführungsform wird die Stellzylinderanordnung als Wählzylinder eines automatisierten Schaltgetriebes für Kraftfahrzeuge verwendet. Dabei ergibt sich ein erhöhter Schaltkomfort.

Ein Ausführungsbeispiel der Erfindung ist in der Zeichnung dargestellt und wird im Folgenden näher beschrieben, wobei sich aus der Beschreibung und/oder der Zeichnung weitere Merkmale und/oder Vorteile ergeben können. Es zeigen

Fig. 1 eine erfindungsgemäße Stellzylinderanordnung,
Fig. 2 eine erste Stellposition (Endlage) der Stellzylinderanordnung,
Fig. 3 eine zweite Stellposition (Zwischenstellung),
Fig. 4 eine dritte Stellposition (Zwischenstellung) und
Fig. 5 eine vierte Stellposition (Endlage).

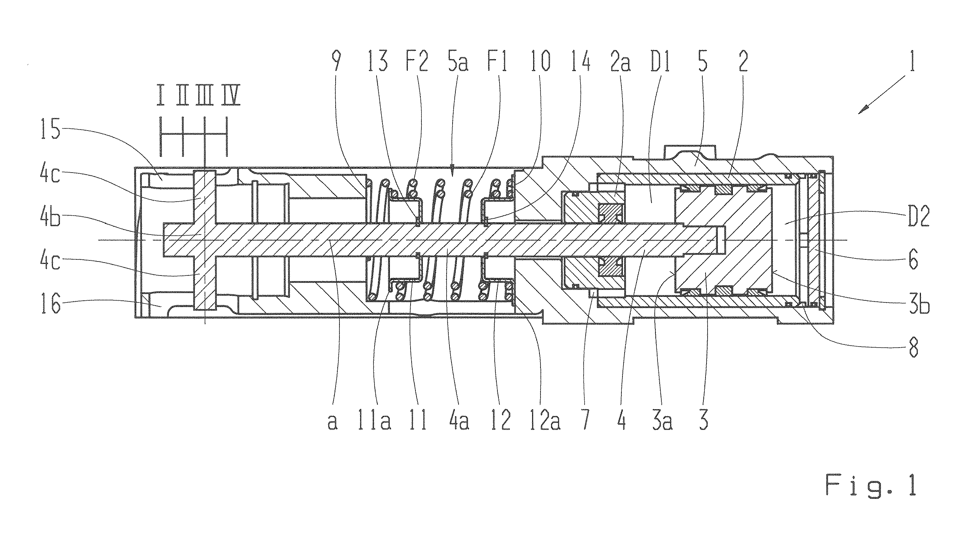

Fig. 1 zeigt eine Stellzylinderanordnung 1, welche einen Zylinder 2, einen im Zylinder 2 aufgenommenen Kolben 3 sowie eine am Kolben 3 befestigte Kolbenstange 4 aufweist. Der Zylinder 2, welcher eine durchgehende Innenwand und einen ersten Zylinderboden 2a aufweist, ist in einer Bohrung eines Gehäuses 5 aufgenommen und wird nach außen durch einen zweiten Zylinderboden 6 abgeschlossen. Das Gehäuse 5 und der erste Zylinderboden 2a, welcher im dargestellten Ausführungsbeispiel einstückig mit dem Zylinder 2 ausgebildet ist, weisen Durchbrüche (ohne Bezugszahl) auf, welche von der Kolbenstange 4 durchsetzt werden. Im Zylinder 2 sind ein erster Druckraum D1 zwischen erstem Zylinderboden 2a und Kolben 3 sowie ein zweiter Druckraum D2 zwischen Kolben 3 und zweitem Zylinderboden 6 angeordnet. Die Druckräume D1, D2 weisen erste und zweite Verbindungsöffnungen 7,8 für die Beaufschlagung mit einem Druckmedium auf. Der Zylinder 2 wird vorzugsweise pneumatisch, d.h. mit Druckluft betrieben, die Verbindungsöffnungen 7, 8 können somit für die Be- und Endlüftung der beiden Druckräume D1, D2 verwendet werden. Eine hydraulische Betätigung der Stellzylinderanordnung 1 ist jedoch auch möglich. Der Kolben 3 weist eine erste kreisringförmig ausgebildete Kolbenfläche 3a und eine zweite als Vollkreis ausgebildete Kolbenfläche 3b auf. Die Druckräume D1, D2 sind mit einem konstanten Betriebsdruck P beaufschlagbar, sodass sich aufgrund der unterschiedlichen Kolbenflächen 3a, 3b unterschiedliche Druckkräfte auf den Kolben 3 ergeben. Die Kolbenstange 4 weist außerhalb des Zylinders 2 einen mittleren Bereich 4a sowie einen Endbereich 4b auf, welcher Querzapfen 4c für die Hubbegrenzung des Kolbens 3 aufweist. Das Gehäuse 5, auch Schaltgehäuse 5 genannt, weist eine Nische 5a zur Aufnahme von zwei koaxial angeordneten, als Schraubenfedern ausgebildeten Druckfedern F1, F2 auf. Die Nische 5a wird in axialer Richtung durch ein erstes gehäuseseitiges Widerlager 9 und ein zweites gehäuseseitiges Widerlager 10 begrenzt. Die erste Feder F1, welche wegen ihres geringeren Durchmessers gegenüber der zweiten Feder F2 auch innere Feder genannt wird, stützt sich gegenüber einem ersten Federtopf 11 und einem zweiten Federtopf 12 ab, welche über als Sicherungsringe ausgebildete Anschläge 13, 14 mit dem mittleren Bereich 4a der Kolbenstange 4 verbunden sind. Die zweite Feder F2, welche einen größeren Durchmesser als die erste Feder F1 aufweist und daher auch als äußere Feder F2 bezeichnet wird, stützt sich einerseits direkt gegenüber dem gehäuseseitigen Widerlager 9 und andererseits am zweiten Federtopf 12 und mittelbar gegenüber dem zweiten gehäuseseitigen Widerlager 10 ab. Am zweiten Federtopf 12, der ein Widerlager 12a aufweist, stützen sich somit sowohl die erste als auch die zweite Feder F1, F2 ab, während sich am ersten Federtopf 11, der ein Widerlager 11 a aufweist, nur die erste innere Feder F1 abstützt. Die beiden Druckfedern F1, F2 sind somit koaxial und aufgrund ihrer unterschiedlichen Durchmesser ineinander angeordnet, wobei koaxial auf die Längsachse a der Kolbenstange 4, d.h. die Bewegungsrichtung des Kolbens 3 bezogen ist. Die vier Schaltpositionen I, II, III, IV sind, bezogen auf die Position der Querzapfen 4c, in der Zeichnung angedeutet, wobei I und IV die Endlagen und II, III die Zwischenstellungen bezeichnen.

Das Gehäuse 5 weist in seinem dem Zylinder 2 abgewandten Bereich Längsnuten 15, 16 auf, welche als Endanschläge für die Querzapfen 4c in den beiden Stellpositionen I, IV dienen. Andererseits kann der Endbereich 4b der Kolbenstange 4 mit nicht dargestellten mechanischen Übertragungsmitteln zur Übertragung der Schaltbewegung des Kolbens 3 verbunden werden. Die dargestellte und beschriebene Stellzylinderanordnung 1 wird vorzugsweise als Wählzylinder für ein automatisiertes Schaltgetriebe verwendet. Mit der Wahl der vier Stellpositionen können somit vier Schaltgassen des Schaltgetriebes angewählt werden.

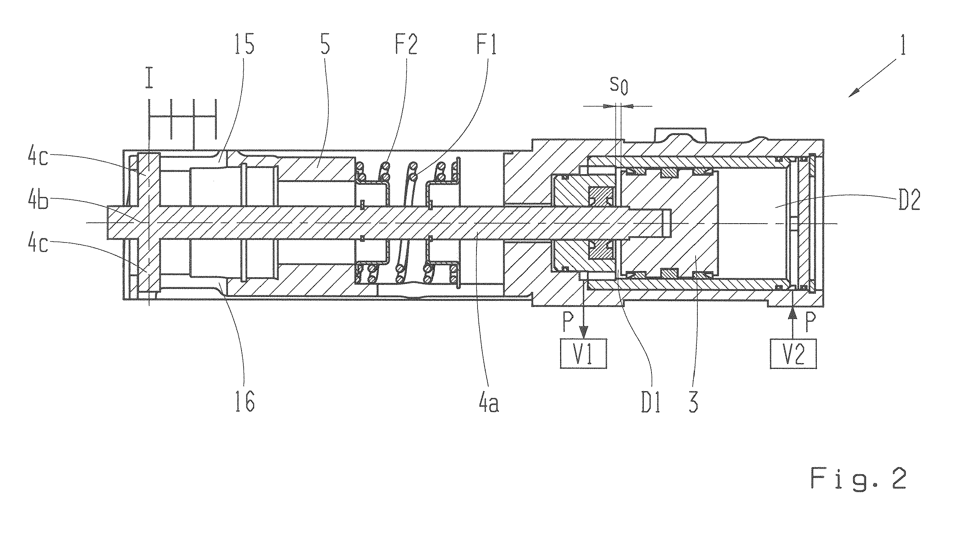

Fig. 2 zeigt die Stellzylinderanordnung 1 gemäß Fig. 1 in der Stellposition I, d.h. in einer Endlage, wobei sich die beiden Querzapfen 4c der Kolbenstange 4 am Anschlag in den Längsnuten 15, 16 des Gehäuses 5 befinden. Der Kolben 3 befindet sich in der Zeichnung in einer linken Position. Ein erstes Ventil V1 sowie ein zweites Ventil V2 steuern die Druckbeaufschlagung des ersten bzw. des zweiten Druckraumes D1, D2, wobei eine Belüftung (Druckbeaufschlagung) durch einen Pfeil P mit Spitze nach oben und eine Entlüftung durch einen Pfeil P Spitze nach unten dargestellt sind. Im vorliegenden Fall ist der zweite Druckraum D2 belüftet, während der erste Druckraum D1 entlüftet ist. Der Kolben 3 wird von Seiten des Druckraumes D2 mit der Kolbenkraft $F_{K2}$ belastet, die erste und die zweite Feder F1, F2 sind - wie aus der Darstellung ersichtlich - gestaucht und üben auf die Kolbenstange 4 und damit auf den Kolben 3 eine resultierende Federkraft $F_{FR} = F_{F1} + F_{F2}$ aus. Für eine stabile Endlage muss folgende Ungleichung erfüllt sein:

$$F_{K2} > F_{FR}.$$

Die Kolbenkraft muss also gegenüber den Federkräften überwiegen.

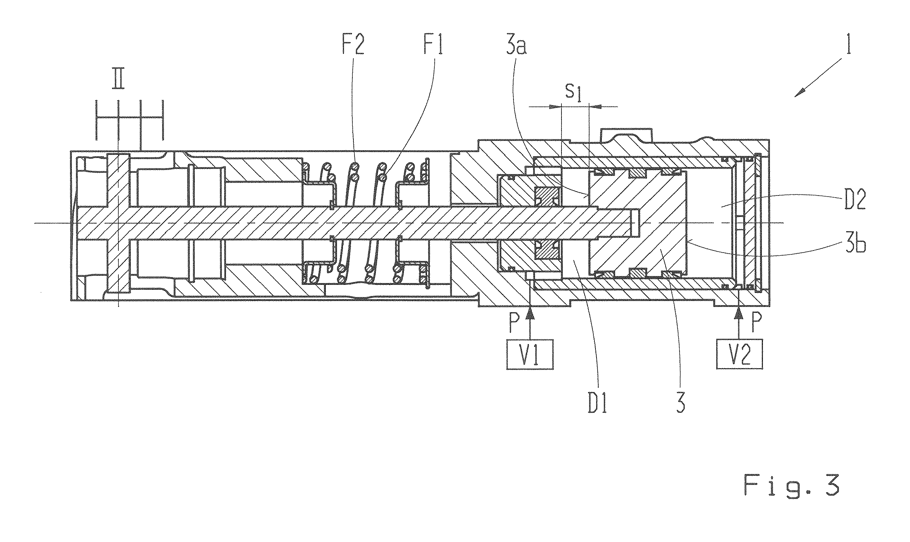

Fig. 3 zeigt die Stellposition II, d.h. eine Zwischenlage, wobei beide Druckräume D1, D2 belüftet sind, wie durch die beiden Pfeile P mit Pfeilspitze oben zeigen. Auf den Kolben 3 wirken Druckkräfte von beiden Seiten, d.h. auf die Kolbenflächen 3a, 3b, wobei die Druckkraft auf die Kolbenfläche 3b wegen des größeren Querschnittes überwiegt und den Kolben 3 in der Zeichnung nach links zu drücken versucht. Dem wirken die Summe der Federkräfte der gestauchten Federn F1, F2 entgegen, wobei für die Einhaltung einer stabilen Lage folgende beiden Ungleichungen erfüllt sein müssen:

$$F_{F1} + F_{F2} > F_{K2} - F_{K1}$$

$$F_{K2} - F_{K1} > F_{F2}$$

Die Differenz der Kolbenkräfte muss also einerseits kleiner als die Summe der Federkräfte und andererseits größer als die Federkraft der äußeren Feder F2 sein.

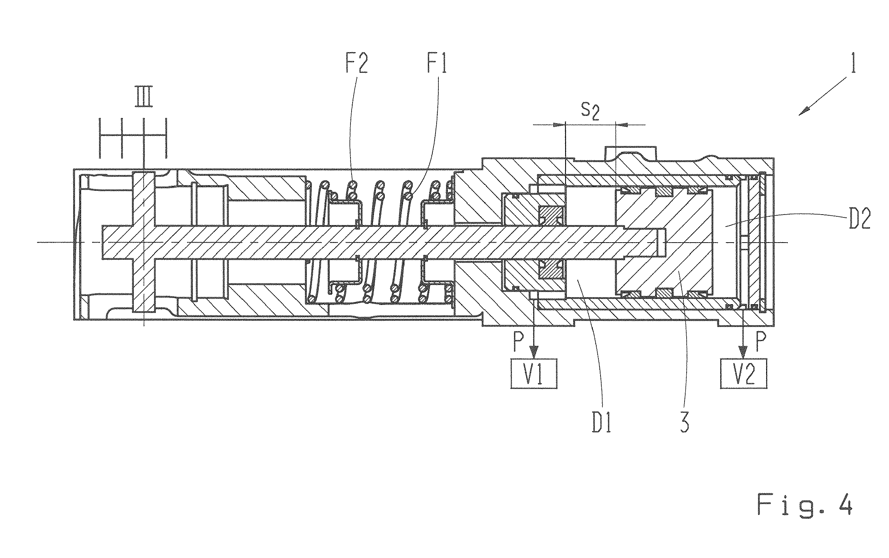

Fig. 4 zeigt die Stellzylinderanordnung 1 in der Stellposition III, d.h. in einer Zwischenlage, wobei es sich hier um eine so genannte federzentrierte Position handelt. Der Kolben 3 wird in seiner Position lediglich durch die Kräfte der Federn F1, F2 gehalten, da beide Druckräume D1, D2 entlüftet, d.h. drucklos sind, was durch die Pfeile P mit nach unten gerichteter Spitze angedeutet ist. In der Stellposition III bedarf es also keiner Energiezufuhr von außen.

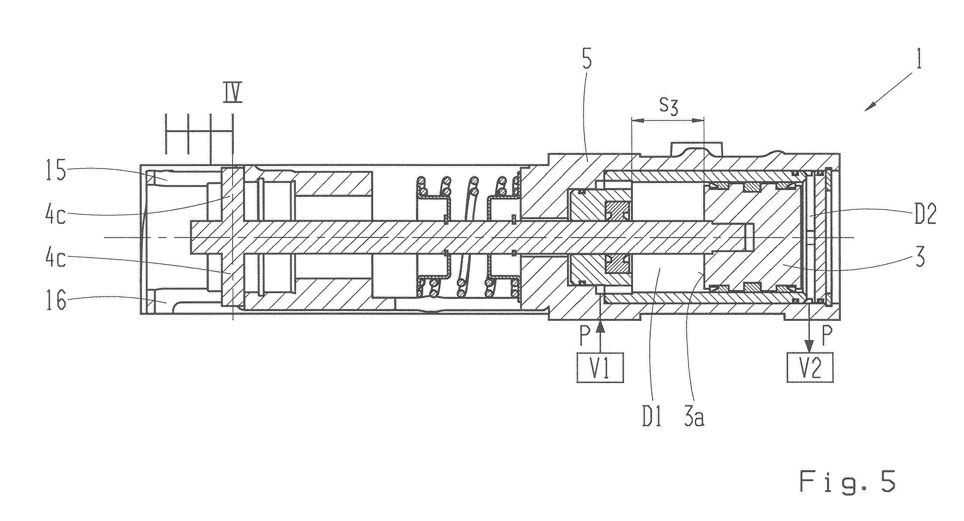

Fig. 5 zeigt die Stellzylinderanordnung 1 in der Stellposition IV, d.h. in der zweiten Endlage; die Querzapfen 4c befinden sich in den Längsnuten 15, 16 des Gehäuses 5 am Anschlag. Der erste Druckraum D1 ist belüftet, wie der nach oben gerichtete Pfeil P zeigt, während der zweite Druckraum D2 entlüftet ist, wie der nach unten gerichtete Pfeil P zeigt. Zur Einhaltung einer stabilen Endlage muss folgende Ungleichung erfüllt sein:

$$F_{K1} > F_{F1}$$

Die auf die Kolbenfläche 3a wirkende Druckkraft muss also größer sein als die rückstellende Kraft der inneren Feder F1.

In den Figuren 2 bis 5 sind die zunehmenden Abstände der Kolbenfläche 3a vom ersten Zylinderboden 2a mit $s_0$, $s_1$, $s_2$ und $s_3$ bezeichnet.

Bezugszeichen

| | |
|---|---|
| 1 | Stellzylinderanordnung |
| 2 | Zylinder |
| 2a | erster Zylinderboden |
| 3 | Kolben |
| 3a | erste Kolbenfläche |
| 3b | zweite Kolbenfläche |
| 4 | Kolbenstange |
| 4a | mittlerer Bereich |
| 4b | Endbereich |
| 4c | Querzapfen |
| 5 | Gehäuse |
| 5a | Nische |
| 6 | zweiter Zylinderboden |
| 7 | erste Verbindungsöffnung |
| 8 | zweite Verbindungsöffnung |
| 9 | erstes Widerlager |
| 10 | zweites Widerlager |
| 11 | erster Federtopf |
| 11a | erstes Widerlager |
| 12 | zweiter Federtopf |
| 12a | zweites Widerlager |
| 13 | erster Anschlag |
| 14 | zweiter Anschlag |
| 15 | Längsnut |
| 16 | Längsnut |
| | |
| a | Längsachse/Kolben |
| D1 | erster Druckraum |
| D2 | zweiter Druckraum |
| F1 | erste Druckfeder |
| F2 | zweite Druckfeder |
| P | Betriebsdruck, Pfeil |
| V1 | erstes Ventil |
| V2 | zweites Ventil |
| $s_0$, $s_1$, $s_2$, $s_3$ | Kolbenhub |
| I, II, III, IV | Stellpositionen |

**Patentansprüche**

1. Stellzylinderanordnung (1) für vier Stellpositionen (I, II, III, IV), umfassend einen Zylinder (2), einen im Zylinder (2) aufgenommenen Kolben (3) mit einer aus dem Zylinder (2) herausragenden Kolbenstange (4), einen ersten Druckraum (D1) sowie einen zweiten Druckraum (D2), welche jeweils mit einem Druckmedium beaufschlagbar sind, sowie zwei Schaltventile (V1, V2), durch welche der Ein- und Auslass des Druckmediums steuerbar ist, und zwei Kraftspeicher (F1, F2), durch welche der Kolben (3) gegenüber mit dem Zylinder (2) verbundenen Widerlagern (9, 10) abstützbar ist.

2. Stellzylinderanordnung nach Anspruch 1, **dadurch gekennzeichnet, dass** die Kraftspeicher als Druckfedern (F1, F2) ausgebildet sind.

3. Stellzylinderanordnung nach Anspruch 2, **dadurch gekennzeichnet, dass** die Druckfedern als Schraubenfedern (F1, F2) ausgebildet und koaxial zueinander angeordnet sind.

4. Stellzylinderanordnung nach Anspruch 3, **dadurch gekennzeichnet, dass** die erste Druckfeder (F1) zwischen einem ersten Federtopf (11) und einem zweiten Federtopf (12) eingespannt ist.

5. Stellzylinderanordnung nach Anspruch 4, **dadurch gekennzeichnet, dass** der erste und der zweite Federtopf (11, 12) über erste und zweite Anschläge (13, 14) gegenüber der Kolbenstange (4, 4a) abstützbar sind.

6. Stellzylinderanordnung nach einem der Ansprüche 1 bis 5, **dadurch gekennzeichnet, dass** der erste Federtopf (11) ein erstes Widerlager (11 a) zur Abstützung der ersten inneren Feder (F1) aufweist.

7. Stellzylinderanordnung nach einem der Ansprüche 3 bis 6, **dadurch gekennzeichnet, dass** der zweite Federtopf (12) ein zweites Widerlager (12a) zur Abstützung der ersten inneren und der zweiten äußeren Feder (F1, F2) aufweist.

8. Stellzylinderanordnung nach einem der Ansprüche 1 bis 7, **dadurch gekennzeichnet, dass** die Widerlager (9, 10) in einem Gehäuse (5), welches den Zylinder (2) mit Kolben (3) und Kolbenstange (4) aufnimmt, zur Abstützung der ersten inneren und zweiten äußeren Feder (F1, F2) angeordnet sind.

9. Stellzylinderanordnung nach einem der Ansprüche 1 bis 8, **dadurch gekennzeichnet, dass** der Zylinder (2) eine durchgehende Innenwand zur Führung des Kolbens (3) aufweist.

10. Stellzylinderanordnung nach einem der Ansprüche 1 bis 9, **dadurch gekennzeichnet, dass** der Kolben (3) in seiner Stellposition II durch ein Gleichgewicht der Kräfte der Federn (F1, F2) und der Druckkräfte auf den Kolben (3) fixierbar ist.

11. Stellzylinderanordnung nach einem der Ansprüche 1 bis 10, **dadurch gekennzeichnet, dass** der Kolben (3) in seiner Stellposition III allein durch die Kräfte der ersten und zweiten Druckfeder (F1, F2) fixierbar ist.

12. Stellzylinderanordnung nach einem der Ansprüche 1 bis 11, verwendbar als ählzylinder eines automatisierten Schaltgetriebes für Kraftfahrzeuge.

EP 2 816 258 A1

Fig. 1

Fig.2

Fig. 3

EP 2 816 258 A1

Fig. 4

Fig. 5

Europäisches
Patentamt
European
Patent Office
Office européen
des brevets

**EUROPÄISCHER RECHERCHENBERICHT**

Nummer der Anmeldung

EP 14 16 7829

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 32 13 757 A1 (AUTOIPARI KUTATO INTEZET [HU]; CSEPELI AUTOGYAR [HU]) 20. Januar 1983 (1983-01-20) * Seite 5, Zeilen 6-9 * * Seite 7, Zeile 13 - Seite 11, Zeile 29; Abbildung 1 * ----- | 1-12 | INV. F16H61/30 F15B11/12 |
| X | EP 0 803 651 A1 (MAGNETI MARELLI SPA [IT]) 29. Oktober 1997 (1997-10-29) * Spalte 2, Zeile 15 - Spalte 5, Zeile 19; Abbildungen 1-5 * ----- | 1-12 | |
| X | FR 2 889 566 A1 (PEUGEOT CITROEN AUTOMOBILES SA [FR]) 9. Februar 2007 (2007-02-09) * Seite 3, Zeile 29 - Seite 8, Zeile 8; Abbildungen 1-6 * ----- | 1-12 | |
| X | EP 0 813 006 A2 (FIAT RICERCHE [IT]) 17. Dezember 1997 (1997-12-17) * Spalte 2, Zeile 15 - Spalte 4, Zeile 26; Abbildungen 1-5 * ----- | 1-12 | RECHERCHIERTE SACHGEBIETE (IPC) |
| X | DE 10 2011 088240 A1 (ZAHNRADFABRIK FRIEDRICHSHAFEN [DE]) 13. Juni 2013 (2013-06-13) * Absatz [0032] - Absatz [0043]; Abbildungen 1-6 * ----- | 1-12 | F16H F15B |
| A | GB 1 374 190 A (GEN SIGNAL CORP) 20. November 1974 (1974-11-20) * Abbildung 1 * ----- | 1,4-7 | |

Der vorliegende Recherchenbericht wurde für alle Patentansprüche erstellt

| Recherchenort | Abschlußdatum der Recherche | Prüfer |
|---|---|---|
| München | 25. August 2014 | Heneghan, Martin |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**                 EP 14 16 7829

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

25-08-2014

| Im Recherchenbericht angeführtes Patentdokument | Datum der Veröffentlichung | Mitglied(er) der Patentfamilie | | Datum der Veröffentlichung |
|---|---|---|---|---|
| DE 3213757 A1 | 20-01-1983 | DE | 3213757 A1 | 20-01-1983 |
| | | HU | 187363 B | 28-12-1985 |
| | | SE | 457820 B | 30-01-1989 |
| EP 0803651 A1 | 29-10-1997 | BR | 9700610 A | 03-11-1998 |
| | | DE | 69702733 D1 | 14-09-2000 |
| | | DE | 69702733 T2 | 12-04-2001 |
| | | EP | 0803651 A1 | 29-10-1997 |
| | | ES | 2149527 T3 | 01-11-2000 |
| | | IT | T0960335 A1 | 27-10-1997 |
| | | US | 5816131 A | 06-10-1998 |
| FR 2889566 A1 | 09-02-2007 | KEINE | | |
| EP 0813006 A2 | 17-12-1997 | EP | 0813006 A2 | 17-12-1997 |
| | | IT | T0960507 A1 | 12-12-1997 |
| DE 102011088240 A1 | 13-06-2013 | KEINE | | |
| GB 1374190 A | 20-11-1974 | DE | 2305579 A1 | 13-12-1973 |
| | | GB | 1374190 A | 20-11-1974 |
| | | JP | S4930767 A | 19-03-1974 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

**In der Beschreibung aufgeführte Patentdokumente**

- DE 102012218907 A1